(19) **Europäisches Patentamt**

**European Patent Office**

**Office européen des brevets**

(11) **EP 0 518 188 B1**

(12) **EUROPÄISCHE PATENTSCHRIFT**

(45) Veröffentlichungstag und Bekanntmachung des Hinweises auf die Patenterteilung:
**21.02.1996 Patentblatt 1996/08**

(51) Int Cl.[6]: **G01N 15/02**

(21) Anmeldenummer: **92109319.1**

(22) Anmeldetag: **03.06.1992**

(54) **Verfahren zur Bestimmung der Partikelgrössenverteilung von Partikelgemischen**

Method for determining the size distribution of particles in mixtures of particles

Procédé pour la détermination de la distribution de tailles de particules dans des mélanges de particules

(84) Benannte Vertragsstaaten:
**BE CH DE FR GB LI NL SE**

(30) Priorität: **07.06.1991 DE 4119240**

(43) Veröffentlichungstag der Anmeldung:
**16.12.1992 Patentblatt 1992/51**

(73) Patentinhaber: **FIRMA HAVER & BOECKER**
**D-59302 Oelde (DE)**

(72) Erfinder: **Schumann, Matthias**
**O-5300 Weimar (DE)**

(74) Vertreter: **Stracke, Alexander, Dipl.-Ing. et al**
**D-33613 Bielefeld (DE)**

(56) Entgegenhaltungen:
**WO-A-89/05971 DD-A- 260 764**
**DE-A- 2 855 583**

# EP 0 518 188 B1

**Beschreibung**

Die Erfindung betrifft ein Verfahren zur automatischen Partikelgrößenanalyse von Partikelgemischen insbesondere zur steuerungstechnischen Beeinflussung der Herstellung und Verarbeitung eines solchen.

Die Bestimmung der Partikelgrößenverteilung eines dispersen Gemisches soll in der Regel schnell erfolgen und repräsentativ für eine Gesamtmenge sein. Neben bekannten Verfahren wie der Siebanalyse und der Sedimentation gewinnen immer mehr die optoelektronischen Meßverfahren an Bedeutung, da sie vor allem Anforderungen hinsichtlich der Automatisierbarkeit am besten gerecht werden.

In den Patentschriften DD-WP 260 764 und DD-WP 278 859 werden Verfahren zur Bestimmung des granulometrischen Zustandes bzw. des Körnungsverhältnisses von Korngemischen beschrieben, bei denen kontinuierlich oder auch diskontinuierlich eine Probe entnommen wird, und die Partikel optisch getrennt mit einer vorherbestimmten einheitlichen Geschwindigkeit rechtwinklig an einem CCD- Zeilensensor vorbeibewegt werden.

Im DD-WP 260 764 werden in zeitlich konstanter Folge die Partikel zeilenweise abgetastet (Scans). Die so signalisierten Breiten der jeweiligen Partikelabschnitte (Sehnen) werden in Klassen unterschiedlicher Sehnenlänge eingeordnet. Bei Erreichen eines festgelegten Zählerstandes oder einer Zählzeit wird mittels einer Kalibrierfunktion die sogenannte Körnungszahl ermittelt. Hier handelt es sich um ein Schnellverfahren, mit dem von jedem erfaßten Partikel mehrere Sehnenlängen registriert und in die Auswertung einbezogen werden.

Bei Gemischen mit engbegrenzten Partikelgrößen ist dieses Verfahren jedoch ungeignet, da die Trennschärfe der Kalibrierfunktion nicht mehr ausreicht.

Praktische Nachteile beider Erfindungen bestehen in der Forderung nach einheitlicher Partikelgeschwindigkeit während des Meßvorganges. Diese Bedingung erfordert entweder einen hohen technischen Aufwand, z.B. eine Vakuummeßzelle oder sie begrenzt den Meßbereich durch Vernachlässigung der Reibung, die nur bei relativ schweren Partikeln statthaft ist.

Das Verfahren nach DD-WP 260 764 funktioniert nur bei annähernd ähnlichen Verteilungsfunktionen und gibt keine Auskunft über den Verlauf der Partikelgrößenverteilung.

Die Patentschrift DD-WP 278 764 erfordert, daß jedes Partikel mindestens einmal abgetastet wird. Daraus ergibt sich eine sehr hohe Datenrate, die zu meßtechnischen Problemen führt oder nur einen sehr geringen Meßgutdurchsatz zuläßt, der einen On- Line- Betrieb verhindert.

Verfahren, die auf eine genauere Auswertung orientieren, beruhen darauf, daß mittels optoelektronischer Vorrichtungen statische Bilder erzeugt werden, die dann mit weiteren aufwendigen Vorrichtungselementen oder mathematischen Methoden ausgewertet werden.

Aus der DE-PS 2855 583 ist ein Verfahren bekannt, bei dem eine Probe eines Partikelgemisches aus einer geeigneten Fallhöhe herabfällt, und während des Herabfallens mit einer Fernsehkamera Bilder der Partikel registriert werden. Aus den einzelnen nacheinander projizierten statischen Bildern wird die Oberflächenverteilung des Gemisches auf der Grundlage der gemessenen Projektionsflächen ermittelt. Lange Meßzeiten schließen eine Breitenanwendung aus.

Gegenstand der Erfindung ist ein neues, automatisierbares Verfahren unter Verwendung bekannter, einfacher optoelektronischer Meßtechnik, mit dem eine relativ breite Partikelgrößenverteilung eines Gemisches meßbar ist. Neben einem hohen Meßgutdurchsatz soll gleichzeitig eine hohe Meßgenauigkeit erzielt werden.

Mittels bekannter zeilenweiser optoelektronischer Abtastung eines vereinzelten Partikelstromes, dem Registrieren von Sehnenlängen und Zuordnen dieser Längen zu bestimmten Sehnenklassen wird die Aufgabe erfindungsgemäß dadurch gelöst, daß

a) der Partikelstrom sich in einem transparenten flüssigen oder gasförmigen Medium durch Schwerkraft oder zusätzliche Kräfte durch die optoelektronische Meßstrecke senkrecht zu parallelgerichteten Lichtstrahlen vorbeibewegt.

b) die Belichtungszeit eines Scans kleiner dem Quotienten $d_{min}/(2*v_{min})$ ist,
wobei $d_{min}$ der Durchmesser und $v_{min}$ die Geschwindigkeit des kleinsten Partikels sind,

c) der zeitliche Abstand zwischen zwei Scans vorzugsweise größer dem Quotienten $d_{min}/v_{min}$ sein sollte,

d) für jede zu analysierende Partikelgröße die Wahrscheinlichkeit für das Auftreten einer Sehne in einer bestimmten Sehnenklasse berechenbar oder bekannt ist und somit beginnend mit der größten Partikelklasse rücklaufend bis zur kleinsten, die Anzahl der Partikel durch den Quotienten aus gemessener Sehnenanzahl zu Auftrittswahrscheinlichkeit ermittelt werden, wobei nach Jeder ermittelten Anzahl von Partikeln einer bestimmten Größe die Sehnenlängenverteilung entsprechend der zu diesen Partikeln gehörenden Sehnen korrigiert werden muß.

Der Sehnenklassifikator besitzt n Sehnenklassen mit den Sehnenklassengrenzen $l_i$ ($i=1..n$), in denen die gemessenen und zugeordneten Sehnen gezählt und über folgenden Transformationsalgorithmus in eine anzahlbezogene Partikelgrößenverteilung umgerechnet werden.

Die Umrechnung erfolgt zunächst unter folgenden zwei Annahmen:

a) Das analysierte Gemisch besteht aus Kugeln .

b) Die Kugeln besitzen Durchmesser $d_j$, die jeweils den oberen Sehnenklassengrenzen entsprechen

$$(d_j=l_i \; ; \; i,j=1..n).$$

Für dieses vorausgesetzte Modellgemisch aus geometrisch definierten Partikeln läßt sich eine Matrix $p_{j,i}$ aufstellen, die angibt, mit welcher Wahrscheinlichkeit ein die Meßstrecke passierendes Partikel mit dem Durchmesser $d_j$ bei dem Scanning eine Sehnenlänge der i- ten Sehnenklasse liefert.

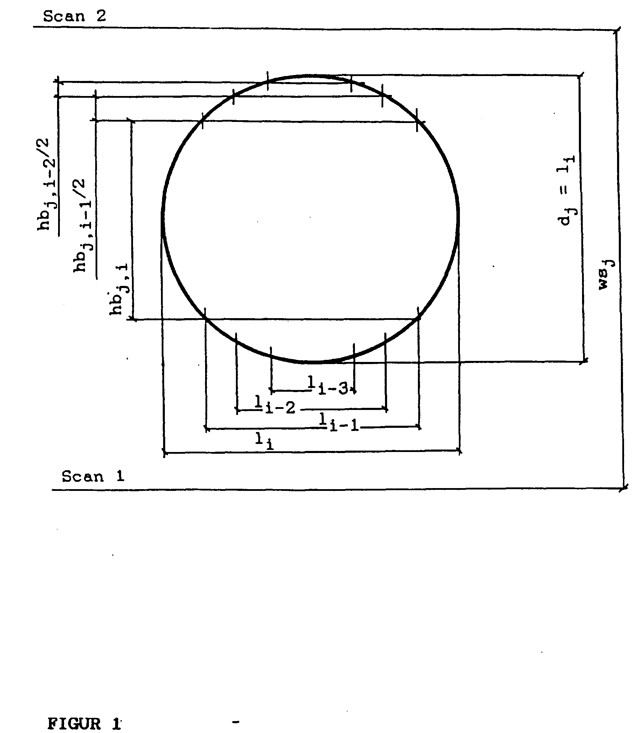

Die Wahrscheinlichkeiten $p_{j,i}$ berechnen sich aus dem Längenverhältnis $hb_{j,i}/ws_j$, wobei $hb_{j,i}$ die Höhe des Bereiches innerhalb einer projizierten Kreisfläche mit dem Durchmesser $d_j$ darstellt, in dem Sehnen der Längenklass i auftreten können und $ws_j$ die zurückgelegte Wegstrecke in der Zeit zwischen zwei aufeinanderfolgenden Scans eines Partikels mit dem Durchmesser $d_j$ ist (FIGUR 1).

Die Werte für $hb_{j,i}$ und $ws_j$ sind bei bekannter Sehnenklasseneinteilung, Scanfrequenz und Partikelgeschwindigkeit berechenbar.

Die Berechnung erfolgt unter der Annahme, daß sich die Partikelgeschwindigkeiten in der Zeit zwischen zwei aufeinanderfolgenden Scans nicht relevant ändern.

Mit Hilfe der Wahrscheinlichkeiten $p_{j,i}$ und der in den Sehnenklassen registrierten Sehnenanza len $san_i$ läßt sich die Anzahl $pan_j$ der Partikel beginnend mit dem größten Partikeldurchmesser $d_j$ durch den Quotienten $san_j/p_{j,i}$ (i=j) berechnen.

Alle unter der Berücksichtigung der entsprechenden Wahrscheinlichkeiten zu diesen Partikeln gehörenden Sehnen in allen möglichen Sehnenklassen müssen nun von der bestehenden Sehnenanzahlverteilung subtrahiert werden. Danach erfolgt in analoger Weise die Berechnung der Partikelanzahl in den darunterliegenden Partikelgrößenklassen. Die erhaltene anzahlbezogene Partikelgrößenverteilung läßt sich in eine volumenbezogene und oei Kenntnia der Rohdichte in eine massebezogene Verteilung transformieren.

Die für die Transformation getroffenen Modellbedingungen verursachen bei der Vermessung von Partikeln mit unregelmäßigen Formen keine relevanten Fehler.

Der Meßvorgang sowie die Sehnenlängenklassifizierung und Zählung erfolgen im Echtzeitbetrieb mittels eines Rechners. Die Transformation in eine Partikelgrößenverteilung führt der Rechner im Anschluß an die Messung innerhalb von Zehntelsekunden aus.

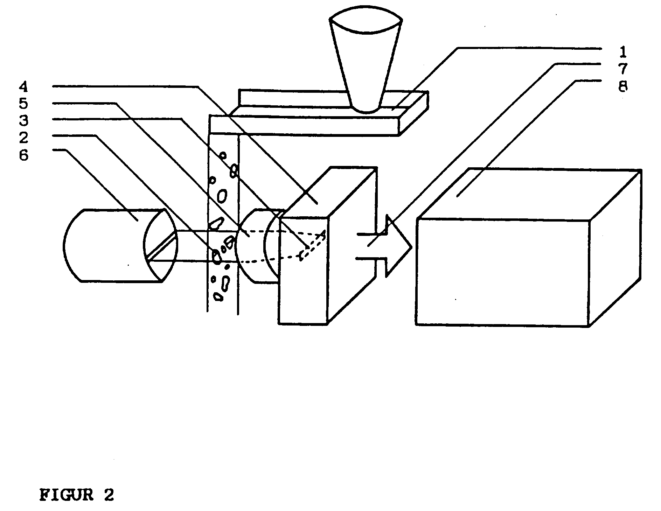

Mit dem in FIGUR 2 dargestellten Meßprinzip soll die Erfindung an einem Ausführungsbeispiel näher erläutert werden.

Eine Sammelprobe, bestehend aus Sand mit einer Körnung von 0,1 bis 2 mm wird durch ein Förderorgan 1 aus einem Probensammelbehälter abgezogen. Das Förderorgan kann ein Förderband oder eine Vibrationsrinne sein, mit dem/der ein ca. 75 mm breiter Partikelstrom 2 erzeugt wird, wobei die einzelnen Partikel getrennt voneinander den Sensor 3 passieren.

Bei feuchtem und agglomeriertem Meßgut empfiehlt sich die Dispergierung der Probe in einer Flüssigkeit, die dann in einer Horizontalströmung am Sensor 3 vorbeigeleitet wird.

Der Sensor 3 , ein CCD- Zeilensensor, der innerhalb einer Kamera 4 mit Objektiv 5 angeordnet ist, arbeitet synchron mit einer gepulsten Laserdiode. Diese sendet über einen Kollimator 6 paralleles Licht mit einer Abstrahldauer von ca 1 µs in zeitlich konstanten von 2 ms aus.

Von einigen, jedoch nicht von allen die Meßstrecke passierenden Partikeln werden Sehnenlängen registriert und in einem Sehnenlängenklassifikator 7 einer bestimmten Längenklasse zugeordnet.

Bei einem Abbildungsmaßstab von 1:1 wird ein Ausschnitt von ca. 27 mm Breite aus dem 75 mm breiten Partikelstrom erfaßt.

Nach ca.10 e wird die Messung unterbrochen. Die Zählerstände des Klassifikators 7 bleiben erhalten. Die Förderleistung des Förderorgans 1 wird für die nächsten 10 s auf das Maximum gestellt.

Danach erfolgt die nächste Teilmessung. Dieser stichprobenartige Meßmodus ermöglicht Probendurchsätze von bis zu 1 kg/min.

Die anschließende Transformation der Sehnenlängenverteilung in eine Korngrößenverteilung erfolgt in einem Computer 8 .

Folgende Tabelle zeigt die gemessene Sehnenlängenverteilung einer Sandprobe (0.1 - 2 mm) und die daraus ermittelte Partikelgrößenverteilung.

| Nr. | Sehnenlänge in mm | | Sehnenanzahl | Partik.-durchm. in mm | Partik.-anzahl | Part.größenverteilungssumme in M-% |
|---|---|---|---|---|---|---|
| | von | bis | | | | |
| 1 | 0,007 | 0,019 | 0 | 0,019 | 0 | 0 |
| 2 | 0,020 | 0,032 | 0 | 0,032 | 0 | 0 |
| 3 | 0,033 | 0,045 | 0 | 0,045 | 0 | 0 |
| 4 | 0,046 | 0,058 | 458.166 | 0,058 | 23.662.246 | 4,37 |
| 5 | 0,059 | 0,084 | 195.910 | 0,084 | 4.266.815 | 6,76 |
| 6 | 0,085 | 0,123 | 150.556 | 0,123 | 1.909.207 | 10,08 |
| 7 | 0,124 | 0,188 | 148.727 | 0,188 | 1.077.269 | 16,75 |
| 8 | 0,189 | 0,266 | 120.341 | 0,266 | 594.504 | 27,16 |
| 9 | 0,267 | 0,383 | 88.727 | 0,383 | 255.582 | 40,49 |
| 10 | 0,384 | 0,565 | 68.743 | 0,565 | 122.457 | 60,96 |
| 11 | 0,566 | 0,838 | 40.128 | 0,838 | 47.357 | 86,78 |
| 12 | 0,839 | 1,228 | 5.889 | 1,228 | 3.987 | 93,61 |
| 13 | 1,229 | 1,800 | 2.325 | 1,800 | 1.004 | 99,03 |
| 14 | 1,801 | 2,632 | 85 | 2,632 | 21 | 99,39 |
| 15 | 2,633 | 3,880 | 38 | 3,880 | 5 | 99,66 |
| 16 | 3,881 | 5,700 | 22 | 5,700 | 2 | 100,00 |
| 17 | 5,701 | 8,378 | 0 | 8,378 | 0 | 100,00 |
| 18 | 8,379 | 12,317 | 0 | 12,317 | 0 | 100,00 |
| 19 | 12,318 | 18,115 | 0 | 18,115 | 0 | 100,00 |
| 20 | 18,116 | 26,630 | 0 | 26,630 | 0 | 100,00 |

**Patentansprüche**

1. Verfahren zur Bestimmung der Partikelgrößenverteilung von Partikelgemischen durch zeilenweise optoelektronische Abtastung eines vereinzelten Partikelstromes, indem Sehnenlängen der Partikel gemessen und in einem Klassifikator bestimmten Längenklassen zugeordnet werden, dadurch gekennzeichnet, daß

   a) der Partikelstrom sich in einem transparenten flüssigen oder gasförmigen Medium durch Schwerkraft oder zusätzliche Kräfte an der optoelektronischen Meßstrecke senkrecht zu einem parallelen Lichtstrahl vorbeibewegt,

   b) die Belichtungszeit eines Scans kleiner dem Quotienten $d_{min}/(2*v_{min})$ ist,
   wobei $d_{min}$ der Durchmesser und $v_{min}$ die Geschwindigkeit des kleinsten zu messenden Partikels sind,

   c) der zeitliche Abstand zwischen zwei Scans größer dem Quotienten $d_{min}/v_{min}$ sein kann,

   d) für jede zu analysierende Partikelgröße die Wahrscheinlichkeiten für das Auftreten einer Sehne in einer bestimmten Sehnenklasse berechenbar oder bekannt sind und somit beginnend mit der größten Partikelklasse rücklaufend bis zur kleinsten die Anzahl der Partikel durch den Quotienten aus gemessener Sehnenanzahl zu Auftrittswahrscheinlichkeit ermittelt werden, wobei nach jeder ermittelten Anzahl von Partikeln einer bestimmten Größe die Sehnenlängenverteilung entsprechend der zu diesen Partikeln gehörenden Sehnen korrigiert werden muß.

**Claims**

1. A method of determining the particle size distribution of particle mixtures by line-wise opto-electronic scanning of an isolated particle stream, by chord lengths of the particles being measured and associated in a classifier with given length classes, characterised in that

   a) the particle stream is moved in a transparent liquid or gaseous medium by the force of gravity or additional forces past the opto-electronic measuring section perpendicularly to a parallel-directed light beam,
   b) the exposure time of a scan is less than the quotient $d_{min}/(2*v_{min})$, wherein $d_{min}$ is the diameter and $V_{min}$ is the speed of the smallest particle to be measured,
   c) the distance in time between two scans can be greater than the quotient $d_{min}/V_{min}$, and
   d) for each particle size to be analysed the probabilities of the occurrence of a chord in a given chord class can be calculated or are known and thus beginning with the largest particle class and going back to the smallest, the number of particles is ascertained by the quotient of the measured number of chords to the occurrence probability, wherein in accordance with each ascertained number of particles of a given size the chord length distribution must be corrected according to the chords belonging to said particles.

**Revendications**

1. Procédé de détermination de la distribution des dimensions des particules de mélanges de particules par balayage optoélectronique ligne par ligne d'un courant de particules isolé, des longueurs de corde des particules étant mesurées et affectées à des classes de longueur déterminées dans un classificateur, caractérisé en ce que

   a) le courant de particules se déplace dans un fluide transparent, liquide ou gazeux, par la force de gravité ou par des forces supplémentaires devant le parcours de mesure optoélectronique, perpendiculairement à un rayon de lumière parallèle,

   b) le temps d'exposition d'un scan est inférieur au quotient $d_{min}/(2*v_{min})$, $d_{min}$ étant le diamètre et $v_{min}$ la vitesse de la plus petite particule à mesurer,

   c) l'intervalle de temps entre deux scans doit être supérieur au quotient $d_{min}/v_{min}$,

   d) pour chaque dimension de particule à analyser les probabilités d'apparition d'une corde dans une classe de cordes déterminée peuvent être calculées ou sont connues et en commençant ainsi avec la plus grande classe de particules, en régressant jusqu'à la plus petite, le nombre de particules est déterminé par le quotient du nombre de cordes mesuré et de la probabilité d'apparition, après chaque nombre calculé de particules d'une dimension déterminée, la distribution des longueurs de corde devant être corrigée en fonction des cordes faisant partie de ces particules.

FIGUR 1

FIGUR 2